# EUROPÄISCHE PATENTANMELDUNG

(11) **EP 2 657 408 A1**
(43) Veröffentlichungstag der Anmeldung: **30.10.2013**
(21) Anmeldenummer: 12405040.2
(22) Anmeldetag: 23.04.2012
(51) Int. Cl.: E01F 9/012, B60Q 7/00

(54) **Faltsignal**

(71) Anmelder: Acquaalta Schutzsysteme GmbH, 6330 Cham (CH)
(72) Erfinder: Sager, Bruno, 6330 Cham (CH)
(74) Vertreter: Wagner, Wolfgang Heribert

(57) **Zusammenfassung**

Bei einem pyramidenförmigen Faltsignal sind drei Mantelplatten (1, 2, 3) paarweise längs Seitenkanten drehbar miteinander verbunden. Eine zweite Mantelplatte (2) ist in eine erste Teilplatte (5) und eine zweite Teilplatte (6) geteilt, die längs einer mittig von einer Spitze (9) zu einem unteren Rand laufenden Mantelfaltlinie (7) ebenfalls drehbar miteinander verbunden sind. Ein Boden (4) ist in einen ersten Teilboden (11) und einen zweiten Teilboden (12) geteilt, welche längs einer Bodenfaltlinie (13), die von einem ersten Eckpunkt (10), an dem die erste Mantelplatte (1) und die erste Teilplatte (5) zusammenstossen, ausgeht, ebenfalls drehbar miteinander verbunden sind. Ein Seitenrand des ersten Teilbodens (11) ist mit dem unteren Rand der ersten Teilplatte (5) drehbar verbunden. Durch Anheben des Bodens (4) mittels eines Zugelements kann derselbe zwischen die erste Teilplatte (5) und die erste Mantelplatte (1) gefaltet werden und zugleich die Teilplatten (5, 6) zwischen die erste Mantelplatte (1) und die dritte Mantelplatte (3).

## Beschreibung

### Technisches Gebiet

Die Erfindung betrifft ein Faltsignal zur Aufstellung vor allem an Strassen im Fall von Pannen, Polizei- oder Feuerwehreinsätzen, bei Baustellen, Signalisierungs-änderungen oder dergleichen.

### Stand der Technik

Faltsignale der angesprochenen Art sind seit längerer Zeit in verschiedenen Ausführungen bekannt. So ist in CH 688 167 A5 ein Faltsignal beschrieben, das aus einem dreibeinigen Ständer und daran befestigten Folien, welche Signale tragen, besteht. Dieses Faltsignal ist leicht, aber wegen der biegsamen Folien wenig stabil. Es weist keinen Boden auf und kann nicht ohne weiteres beschwert werden, sodass es durch stärkeren Wind leicht umgeworfen werden kann.

Aus DE 31 24 339 A1 ist ein Faltsignal von ähnlicher Form bekannt, welches aus dreieckigen Platten aus steifem Material aufgebaut ist. Die Platten sind an den Kanten drehbar verbunden und auch längs mittiger Mantelfaltlinien faltbar, sodass das Faltsignal im Prinzip klein zusammengefaltet werden kann. Zur Verbesserung der Standfestigkeit bei Wind sind an den Platten Metalleinlagen zur Beschwerung angebracht, aber die Standfestigkeit wird dadurch beeinträchtigt, dass das Faltsignal keinen Boden aufweist. Dadurch ist es nicht ohne weiteres möglich, es mit Ballast weiter zu beschweren, ausserdem kann Wind leicht unter dasselbe greifen. Wegen der fixen Beschwerung ist das Gesamtgewicht eher hoch.

Ein gattungsgemässes Faltsignal ist schliesslich aus WO 92/21 822 A1 bekannt. Es weist einen nach unten ausfaltbaren, aber im übrigen steifen Boden auf, was ein Zusammenlegen in einen flächigen Zustand erlaubt. Aber die Gesamthöhe des zusammengelegten Faltsignals ist wegen des nach unten ausgefalteten Bodens gross, sodass es viel Platz braucht und nicht bequem getragen werden kann.

### Darstellung der Erfindung

Der Erfindung liegt die Aufgabe zugrunde, ein gattungsgemässes Faltsignal anzugeben, das im Verhältnis zu seiner Grösse im Einsatz klein zusammengelegt werden kann. Diese Aufgabe wird durch die Merkmale im Kennzeichen des Anspruchs 1 gelöst.

Das erfindungsgemässe Faltsignal weist einen Boden auf, der auch beschwert werden kann, sodass es auch bei starkem Wind eine ausreichende Standfestigkeit hat. Es ist dank den steifen Mantelflächen stabil, aber trotzdem leicht. Im zusammengelegten Zustand ist es verhältnismässig klein und kann bequem getragen werden.

### Kurze Beschreibung der Zeichnungen

Im folgenden wird die Erfindung anhand von Figuren, welche lediglich Ausführungsbeispiele darstellen, näher erläutert. Es zeigen
- Fig. 1a: schematisch ein erfindungsgemässes Faltsignal gemäss einer ersten grundsätzlichen Ausführungsform in einsatzbereitem Zustand, schräg von vorn,
- Fig. 1b: das Faltsignal von Fig. 1a, von unten,
- Fig. 2a: das erfindungsgemässe Faltsignal von Fig. 1a,b in teilweise gefaltetem Zustand, schräg von vorn,
- Fig. 2b: das Faltsignal im in Fig. 2a gezeigten Zustand, von unten,
- Fig. 3: eine erste Ausbildung des erfindungsgemässen Faltsignals gemäss der ersten Ausführungsform,
- Fig. 4: eine zweite Ausbildung des erfindungsgemässen Faltsignals gemäss der ersten Ausführungsform,
- Fig. 5: einen Schnitt durch eine Seitenkante des erfindungsgemässen Faltsignals gemäss der ersten oder zweiten Ausbildung,
- Fig. 6: einen Schnitt durch eine Seitenkante des erfindungsgemässen Faltsignals gemäss der zweiten Ausbildung,
- Fig. 7a: schematisch ein erfindungsgemässes Faltsignal gemäss einer zweiten grundsätzlichen Ausführungsform in einsatzbereitem Zustand, schräg von vorn,
- Fig. 7b: das Faltsignal von Fig. 7a, von unten,
- Fig. 8a: das erfindungsgemässe Faltsignal von Fig. 7a,b in teilweise gefaltetem Zustand, von vorn,
- Fig. 8b: vergrössert und schematisch einen Schnitt längs B-B in Fig. 8a, und
- Fig. 9: das erfindungsgemässe Faltsignal von Fig. 7a,b und Fig. 8a,b in gefaltetem Zustand, von vorn.

### Wege zur Ausführung der Erfindung

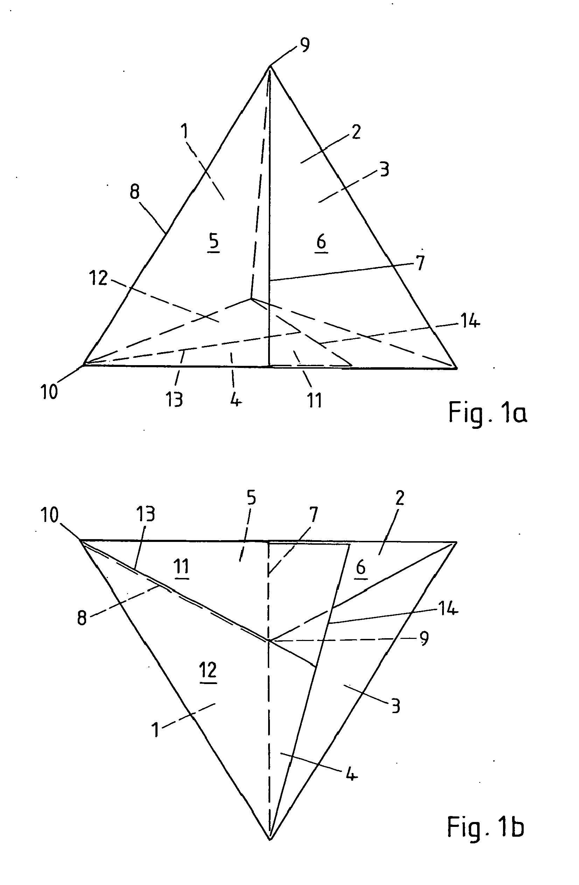

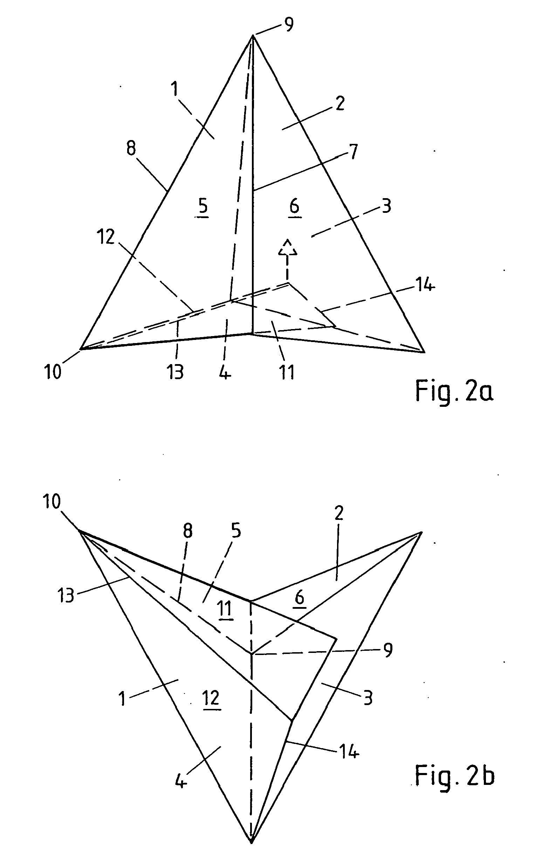

Bei der in Fig. 1a,b und 2a,b dargestellten ersten Ausführungsform besteht das erfindungsgemässe Faltsignal, das im wesentlichen die Form einer dreiseitigen Pyramide, insbesondere eines Tetraeders hat, im wesentlichen aus einer ersten Mantelplatte 1, einer zweiten Mantelplatte 2, einer dritten Mantelplatte 3 und einem Boden 4. Die Mantelplatten 1, 2, 3 haben jeweils die Form eines gleichschenkligen, z.B. gleichseitigen Dreiecks. Die erste Mantelplatte 1 und die dritte Mantelplatte 3 sind durchgehend steif ausgebildet. Die zweite Mantelplatte 2 dagegen besteht aus einer ersten Teilplatte 5 und einer zweiten Teilplatte 6, die jeweils durchgehend steif ausgebildet und längs einer mittig zwischen ihren Seitenrändern zu ihrem unteren Rand laufenden Mantelfaltlinie 7 drehbar oder beschränkt drehbar miteinander verbunden sind, derart, dass ihre Aussenseiten gegeneinander geklappt werden können.

Die erste Mantelplatte 1 und die zweite Mantelplatte 2 sind längs benachbarter Seitenränder derart drehbar miteinander verbunden, dass die Innenseite der ersten Teilplatte 5 gegen die Innenseite der ersten Mantelplatte 1 geklappt werden kann. Die besagten Seitenränder bilden dort also eine erste Seitenkante 8, welche durch eine Spitze 9 und einen ersten Eckpunkt 10 läuft. Benachbarte Seitenränder der zweiten Mantelplatte 2, genauer der zweiten Teilplatte 6 und der dritten Mantelplatte 3 sind ebenfalls drehbar miteinander verbunden, derart, dass ihre Innenseiten gegeneinander geklappt werden können und bilden eine von der Spitze 9 ausgehende weitere Seitenkante, desgleichen benachbarte Seitenränder der ersten Mantelplatte 1 und der dritten Mantelplatte 3.

Der Boden 4 besteht aus einem ersten Teilboden 11 und einem zweiten Teilboden 12, die jeweils durchgehend steif ausgebildet und längs einer Bodenfaltlinie 13 drehbar miteinander verbunden sind, derart, dass ihre Aussenflächen gegeneinander geklappt werden können. Der erste Teilboden 11 ist längs eines vom ersten Eckpunkt 10 ausgehenden Teils eines Seitenrandes mit einem unteren Rand der ersten Teilplatte 5 der zweiten Mantelplatte 2 drehbar verbunden. Ein anschliessender Teil des besagten Seitenrandes folgt einem Teil eines unteren Randes der anschliessenden zweiten Teilplatte 6, ist jedoch nicht mit ihr verbunden. Ein dem ersten Eckpunkt 10 gegenüberliegender Gegenrand 14 des Bodens 4 ist frei.

Aus dem in Fig. 1a,b dargestellten einsatzbereiten Zustand kann das Faltsignal in einen gefalteten Zustand übergeführt werden, in dem es klein, insbesondere sehr flach ist. Es braucht dann wenig Raum und kann bequem gelagert und transportiert werden. Wie das Faltsignal kurz nach Beginn dieser Umstellung aussieht, ist in Fig. 2a,b gezeigt. Die Umstellung kann ausschliesslich durch Anheben der Mitte des Bodens 4 (Pfeil) bewirkt werden. Dadurch werden der erste Teilboden 11 und der zweite Teilboden 12 gegeneinander gefaltet. Der erste Teilboden 11 zieht dabei die erste Teilplatte 5 der zweiten Mantelplatte 2 nach innen, sodass ihre Innenseite gegen die der ersten Mantelplatte 1 geklappt wird, gleichzeitig wird die Aussenseite der zweiten Teilplatte 6 gegen die der ersten Teilplatte 5 geklappt und die Innenseite der dritten Mantelplatte 3 gegen die Innenseite der zweiten Teilplatte 6 und der ersten Mantelplatte 1.

Im gefalteten Zustand ist dann der Boden 4 zwischen die erste Mantelplatte 1 und die erste Teilplatte 5 und die zweite Mantelplatte 2 zwischen die erste Mantelplatte 1 und die dritte Mantelplatte 3 eingefaltet. Die erste Mantelplatte 1, die dritte Mantelplatte 3, die erste Teilplatte 5 und die zweite Teilplatte 6 der zweiten Mantelplatte 2 sowie der erste Teilboden 11 und der zweite Teilboden 12 sind alle parallel zueinander. Das Faltsignal benötigt so sehr wenig Platz, seine Abmessungen gehen, von der Dicke, die der Dicke von sechs Platten entspricht, abgesehen, über die einer einzelnen Mantelplatte nicht hinaus. Die Umstellung ist so einfach wie möglich, es genügt eine einzige Bewegung nach oben, für die, wie weiter unten erläutert wird, ein Zugelement vorgesehen sein kann.

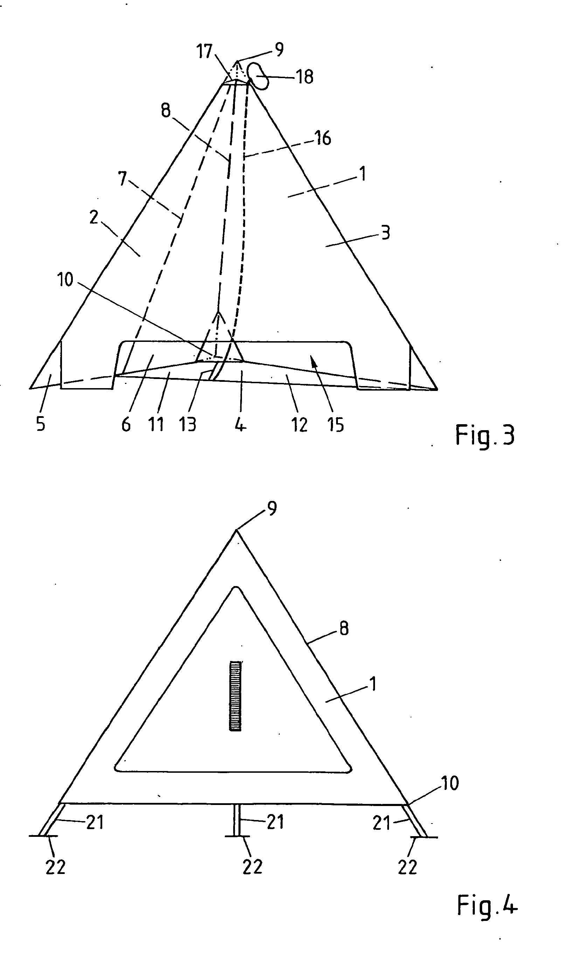

Eine erste Ausbildung eines Faltsignals gemäss der ersten Ausführungsform, d.h. eine Umsetzung ihres oben geschilderten Prinzips, ist Fig. 3 zu entnehmen. Das Faltsignal ist im wesentlichen tetraedrisch, allerdings ist die Spitze 9 abgeschnitten, desgleichen der erste Eckpunkt 10 und die beiden weiteren Eckpunkte, wobei die Schnittebene waagrecht bzw. jeweils senkrecht verläuft. Die Mantelplatten 1, 2, 3 weisen dadurch jeweils die Form eines Trapezes auf, an dessen unterem Rand ein rechteckiger Fussstreifen anschliesst. Aus der dritten Mantelplatte 3 ist ausserdem eine von ihrem unteren Rand ausgehende Ausnehmung 15 aus besagtem Fussstreifen ausgeschnitten, durch welche das Innere des Faltsignals zugänglich ist und insbesondere der Boden 4 mit Ballast, z.B. Metallgegenständen oder Pflastersteinen, beschwert werden kann, was die Standfestigkeit vor allem bei Wind wesentlich verbessert.

Ein flexibles Zugelement 16, z.B. ein Seil oder Band, greift im Bereich der Stelle an, an der die Bodenfaltlinie 13 auf den Gegenrand 14 trifft. Es ist durch eine Öffnung 17, welche durch das Abschneiden der Spitze 9 hergestellt wurde, nach aussen geführt, wo es einen Handgriff 18 trägt, der etwas grösser als die Öffnung 17 ist. Die Länge des Zugelements ist so bemessen, dass es im einsatzbereiten Zustand des Faltsignals bei am Rand der Öffnung 17 anliegendem Griff 18 nahezu straff ist. Dadurch kann der Boden 4 höchstens geringfügig durchhängen und ein Ausfalten desselben nach unten ist nicht möglich. Alternativ können an der Bodenfaltlinie 13 auch zwischen den Teilböden 11, 12 wirksame Anschläge vorgesehen sein, die ein solches Ausfalten nach unten begrenzen oder verhindern.

Durch Ziehen am Handgriff 18 wird der Boden 4 angehoben und das Faltsignal wie oben erläutert in den gefalteten Zustand übergeführt. Es kann im gleichen Zug auch angehoben und weggetragen werden. Das Faltsignal kann leicht im gefalteten Zustand mittels eines an den unteren Rändern der Mantelplatten 1, 3 angreifenden, z.B. durch Klettverbindung fixierten Bandes verriegelt werden. Statt dessen oder zusätzlich kann auch ein Klemmteil am Zugelement 16 eingesetzt werden, dessen Durchmesser grösser ist als die Öffnung 17 im gefalteten Zustand, die dann die Form eines Schlitzes hat, und das am Zugelement 16 nach unten geschoben wird, bis es an den Rand der besagten Öffnung stösst. Es kann aber auch genügen, einen Knoten in das Zugelement 16 zu machen, sodass auf ein Klemmteil verzichtet werden kann.

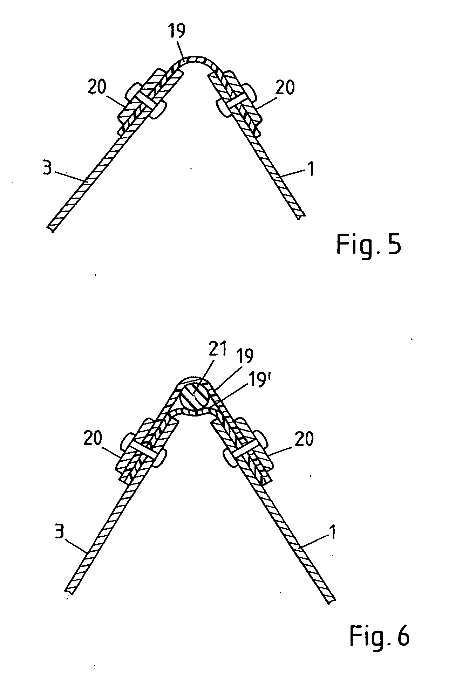

Die Mantelplatten, Teilplatten und Teilböden können jeweils durch ein Scharnier drehbar verbunden sein, welches, wie in Fig. 5 am Beispiel der Mantelplatten 1, 3 dargestellt, von einem flexiblen Scharnierstreifen 19 gebildet wird, welcher jeweils zwischen der Mantelplatte 1; 3 und einer Halteplatte 20 geklemmt ist. Die Halteplatte 20, z.B. aus Metall, kann als Haltestreifen ausgebildet sein, der sich an der Aussenseite der Mantelplatte 1; 3 längs ihres Randes erstreckt und mit ihr vernietet oder verschraubt ist. So ist eine zuverlässige flexible Verbindung zwischen den Mantelplatten 1, 3 gewährleistet. Da der Scharnierstreifen 19 die Seitenränder der Mantelplatten 1, 3 verdeckt, ist die Seitenkante verhältnismässig stumpf, was einen möglichen Aufprall entschärft. Die übrigen Verbindungen zwischen den Mantelplatten 1, 2, 3, ebenfalls die Verbindungen zwischen den Mantelplatten 1, 2 und dem Boden 4 sowie zwischen den Teilplatten 5, 6 der zweiten Mantelplatte 2 und zwischen den Teilböden 11, 12 können, wie gesagt, gleich aufgebaut sein.

Es ist natürlich auch möglich, den Scharnierstreifen 19 und den Haltestreifen jeweils an der Innenseite der Mantelplatte usw. anzuordnen oder sowohl an der Innenseite als auch an der Aussenseite einen Scharnierstreifen und einen Haltestreifen vorzusehen. Eine weitere Möglichkeit besteht darin, den Scharnierstreifen, sei er aussen oder innen angeordnet, mit den Mantelplatten usw. zu verkleben und lediglich an einigen Punkten, vor allem an den Enden der Seitenkante, Unterkante oder Faltlinie Halteplatten vorzusehen, die dann auch quadratisch oder rund sein können.

Eine zweite Ausbildung eines Faltsignals gemäss der ersten Ausführungsform ist in schematischer Form in Fig. 4 dargestellt. Hier sind die Mantelplatten 1, 2, 3 dreieckförmig. Sie können allerdings auch trapezförmig sein, d.h. die Spitze 9 kann wiederum zur Herstellung einer Öffnung, welche dem Herausführen eines Zugelements dient, abgeschnitten sein. Längs der Seitenkanten oder jedenfalls längs unterer Abschnitte derselben sind Stützen 21 eingezogen, welche z.B. aus glas- oder kohlefaserverstärktem Kunststoff bestehen können. Die Stützen 21 können bis auf Fussplatten 22 eingeschoben und auch verschieden weit ausgefahren werden, wobei sie entweder durch Reibschluss oder durch eine formschlüssige Arretierung jeweils in verschiedenen Positionen festgehalten werden können. Auf diese Weise können Gefälle und Bodenunebenheiten ausgeglichen werden.

Die Verbindung der Mantelplatten 1, 3 usw. an den Seitenkanten kann, wie in Fig. 6 gezeigt, durch zwei parallele Scharnierstreifen 19, 19' hergestellt werden und die Stütze 21 kann dann jeweils zwischen denselben eingeschoben sein. Die Stützen 21 können jedoch auch jeweils direkt an einer der Mantelplatten geführt sein.

Die Mantelplatten 1, 2, 3, Teilplatten 5, 6 und Teilböden 11, 12 können aus Plexiglas oder Polycarbonat oder einem anderen Kunststoff oder auch aus Metall, insbesondere Aluminium bestehen oder als Verbundplatten mit einer Kunststoffschicht zwischen zwei Aluminiumschichten ausgebildet sein. In letzterem Fall können die Scharniere durch streifenförmige, z.B. ausgefräste Aussparungen in den Aluminiumschichten hergestellt sein, sodass dort nur die flexible Kunststoffschicht übrig ist. Als Kunststoff eignet sich in diesem Fall Polypropylen wegen seiner Biegsamkeit und Resistenz gegen Ermüdungsbrüche besonders gut. An der Aussenseite sind vorzugsweise alle Mantelplatten 1, 2, 3 mit einer reflektierenden Folie beklebt, welche verschiedene oder auch gleiche Verkehrszeichen trägt, z.B. das in Fig. 4 gezeigte. Dank der Steifheit der Platten können die Folien nach ihren optischen Eigenschaften gewählt werden, insbesondere können solche mit sehr hoher Reflexion eingesetzt werden.

Es sind verschiedene Abwandlungen der oben beschriebenen Ausführungsform möglich. So kann etwa die dritte Mantelplatte fehlen. Der Seitenrand des ersten Teilbodens ist dann vorzugsweise durchgehend mit dem unteren Rand der zweiten Mantelplatte und der Seitenrand des zweiten Teilbodens ebenfalls vorzugsweise durchgehend mit dem unteren Rand der ersten Mantelplatte drehbar verbunden. Die Teilböden sind vorzugsweise wiederum längs einer Bodenfaltlinie verbunden, sodass ein Hochziehen des Bodens zwangsläufig dazu führt, dass auch die Mantelplatten gegeneinander gezogen werden, doch kann auch eine Bodentrennlinie vorgesehen sein, längs welcher die Teilböden dort vollständig getrennt sind, sodass sie nach oben gegen die Innenseiten der Mantelplatten geklappt werden können, bevor die letzteren gegeneinander geklappt werden. Der Winkel, den die erste und die zweite Mantelplatte im einsatzbereiten Zustand einschliessen, muss dann auf eine andere Weise, z.B. durch ein Seil oder einen Anschlag begrenzt werden. Das Faltsignal ist in der Einsatzposition auf einer Seite offen, sodass von dort leicht Ballast auf den Boden gelegt werden kann.

Eine andere Möglichkeit besteht darin, die dritte Mantelplatte, die in diesem Fall vorzugsweise durchgehend steif ausgebildet ist, lösbar mit der zweiten Mantelplatte zu verbinden, derart, dass sie nach Lösen der Verbindung gegen die erste Mantelplatte zurückgeklappt werden kann, sodass das Faltsignal einen Zwischenzustand annimmt, in dem die Aussenseite der dritten Mantelplatte an der der ersten Mantelplatte anliegt, bevor die erste und die zweite Mantelplatte zusammengefaltet werden und das Faltsignal den vollständig gefalteten Zustand annimmt. Die dritte Mantelplatte kann in diesem Zwischenzustand an der ersten Mantelplatte fixierbar sein und an ihrer dann nach aussen weisenden Innenseite ebenfalls eine Folie mit einem weiteren Verkehrszeichen tragen, sodass das Faltsignal im Zwischenzustand auf eine zusätzliche Weise einsetzbar ist. Der Boden kann wie oben für die Ausführung ohne dritte Mantelplatte beschrieben ausgebildet sein.

Eine weitere Abwandlungsmöglichkeit besteht darin, für den Boden ein flexibles Material zu verwenden. Dies ist bei allen vorstehend beschriebenen Ausführungen möglich. Auch in diesem Fall kann ein Zugelement vorgesehen sein, das an einer von den Seitenrändern beabstandeten Stelle am Boden angreift.

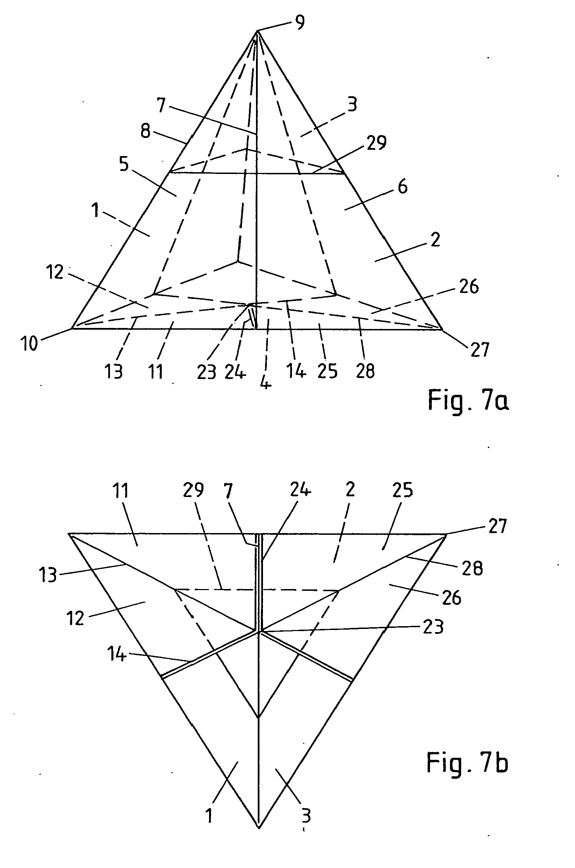

Eine zweite Ausführungsform, welche sich von der ersten durch ein anderes Faltungsmuster unterscheidet, ist in den Figuren 7a,b, 8a,b und 9 dargestellt. Das Faltsignal hat wiederum im wesentlichen die Form einer dreiseitigen Pyramide, insbesondere eines Tetraeders, und entspricht in seinem grundsätzlichen Aufbau dem Faltsignal gemäss der ersten Ausführungsform. Jedoch ist jede der Mantelflächen 1, 2, 3 durch eine von der Spitze 9 mittig zwischen den Seitenrändern zum unteren Rand verlaufende Mantelfaltlinie 7 in zwei Teilplatten 5, 6 geteilt (nur bei der zweiten Mantelplatte 2 bezeichnet).

Der Boden 4 ist ausser durch Seitenränder, an denen er mit dem unteren Rand der ersten Teilplatte 5 der zweiten Mantelplatte 2 und jeweils dem unteren Rand einer Teilplatte der ersten Mantelplatte 1 und der dritten Mantelplatte 3 drehbar verbunden ist, durch einen freien Gegenrand 14 begrenzt, der von der Mitte des unteren Randes der ersten Mantelplatte 1 zu einem Bodenmittelpunkt 23 und weiter zur Mitte der dritten Mantelplatte 3 läuft. Durch eine von der Mitte des unteren Randes der zweiten Mantelplatte 2 zum Bodenmittelpunkt 23 laufende Bodentrennlinie 24 ist er in zwei nicht direkt verbundene Teile geteilt. Der erste Teil besteht aus einem ersten Teilboden 11 und einem zweiten Teilboden 12, die längs einer vom ersten Eckpunkt 10 zum Bodenmittelpunkt 23 laufenden Bodenfaltlinie 13 drehbar miteinander verbunden sind und der zweite Teil aus einem dritten Teilboden 25 und einem vierten Teilboden 26, die längs einer weiteren, von einem zweiten Eckpunkt 27 zum Bodenmittelpunkt 23 laufenden Bodenfaltlinie 28 drehbar miteinander verbunden sind. Ein Drittel der Grundfläche ist vom Boden 4 frei.

Die Mantelflächen 1, 2, 3 sind im Beispiel jeweils ausserdem durch zu ihren unteren Rändern parallele, etwa auf halber Höhe angeordnete Mantelkipplinien 29 (nur bei der zweiten Mantelplatte 2 bezeichnet) nochmals unterteilt, sodass jede der Teilplatten aus einem oberen Teil und einem unteren Teil besteht, welche längs der Mantelkipplinie jeweils drehbar miteinander verbunden sind.

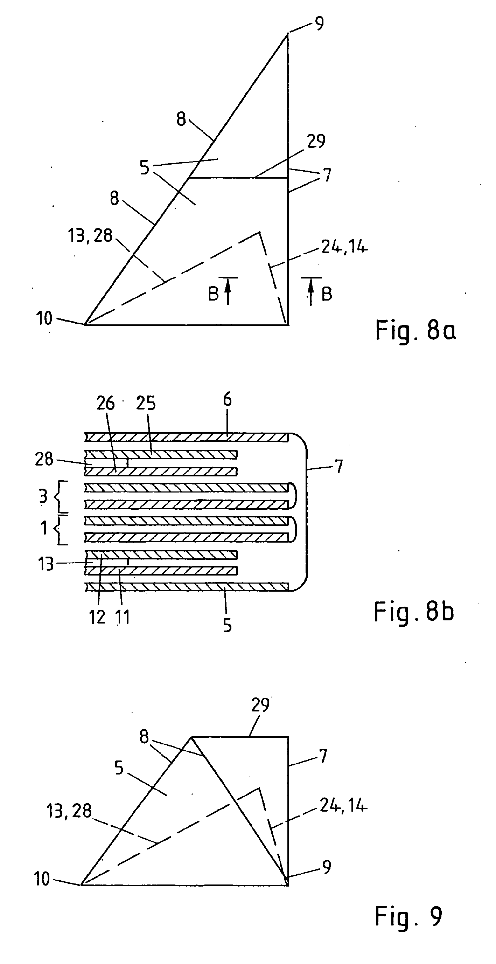

Zur Überführung des Faltsignals aus dem in Fig. 7a,b gezeigten einsetzbereiten Zustand in den gefalteten Zustand wird wiederum der Boden 4 angehoben. Dazu kann wiederum ein Zugelement vorgesehen sein, das in der Nähe des Bodenmittelpunkts 23 im Bereich der Bodenfaltlinie 13 und der Bodenfaltlinie 28 an den beiden Teilen des Bodens 4 angreift und wiederum durch eine Öffnung im Bereich der Spitze 9 nach aussen geführt ist. Dadurch werden der erste Teilboden 5 und der zweite Teilboden 6 sowie der dritte Teilboden 25 und der vierte Teilboden 26 jeweils gegeneinander geklappt und gleichzeitig die angrenzenden Teilplatten gegeneinander gezogen, sodass eine sternförmige Konfiguration entsteht, deren Strahlen dann in eine Lage zusammengeklappt werden, in der sie parallel sind, wie dies in Fig. 8a,b gezeigt ist. Es sind dabei mehrere Konfigurationen möglich, wobei jeweils die Teilplatten einer der Mantelplatten aussen liegen, im Beispiel sind es die Teilplatten 5, 6 der zweiten Teilplatte 2. Anschliessend können die oberen Teile der Teilplatten der Mantelplatten 1, 2, 3 nach unten gefaltet werden, womit der in Fig. 9 gezeigte gefaltete Zustand erreicht ist.

Faltsignale gemäss der zweiten Ausführungsform können sonst den Ausbildungen gemäss Fig. 3, 4 entsprechen. Allerdings kann die Grundform des Faltsignals in diesem Fall auch eine Pyramide mit mehr als drei Seiten sein, insbesondere eine vierseitige Pyramide, vorzugsweise mit rechteckiger, insbesondere quadratischer Grundfläche.

### Bezugszeichenliste

- 1: erste Mantelplatte
- 2: zweite Mantelplatte
- 3: dritte Mantelplatte
- 4: Boden
- 5: erste Teilplatte
- 6: zweite Teilplatte
- 7: Mantelfaltlinie
- 8: erste Seitenkante
- 9: Spitze
- 10: erster Eckpunkt
- 11: erster Teilboden
- 12: zweiter Teilboden
- 13: Bodenfaltlinie
- 14: Gegenrand
- 15: Ausnehmung
- 16: Zugelement
- 17: Öffnung
- 18: Handgriff
- 19, 19': Scharnierstreifen
- 20: Halteplatte
- 21: Stütze
- 22: Fussplatte
- 23: Bodenmittelpunkt
- 24: Bodentrennlinie
- 25: dritter Teilboden
- 26: vierter Teilboden
- 27: zweiter Eckpunkt
- 28: Bodenfaltlinie
- 29: Mantelkipplinie

## Patentansprüche

1. Pyramidenförmiges Faltsignal, mit mindesten einer mindestens abschnittsweise steifen ersten Mantelplatte (1) und einer ebenfalls mindestens abschnittsweise steifen zweiten Mantelplatte (2), welche seitlich aneinander anschliessen, derart, dass sie längs benachbarter Seitenränder drehbar miteinander verbunden sind, sodass sie dort eine durch eine Spitze (9) und einen ersten Eckpunkt (10) laufende erste Seitenkante (8) bilden, sowie mit einem Boden (4) mit einem ersten Seitenrand, welcher längs einer vom ersten Eckpunkt (10) ausgehenden waagrechten Strecke mit der ersten Mantelplatte (1) drehbar verbunden ist und einem zweiten Seitenrand, welcher längs einer ebenfalls vom ersten Eckpunkt (10) ausgehenden Strecke mit der zweiten Mantelplatte (2) drehbar verbunden ist, während ein dem ersten Eckpunkt (10) gegenüberliegender Gegenrand (14) frei ist, **dadurch gekennzeichnet, dass** der Boden nach oben zwischen die erste Mantelplatte (1) und die zweite Mantelplatte (2) einfaltbar ist.

2. Faltsignal nach Anspruch 1, **dadurch gekennzeichnet, dass** es im Bereich der Spitze (9) eine Öffnung (17) aufweist sowie ein flexibles Zugelement (16), welches an mindestens einem von den Seitenrändern beabstandeten Punkt des Bodens (4) angreift und durch die Öffnung (17) nach aussen geführt ist.

3. Faltsignal nach Anspruch 1 oder 2, **dadurch gekennzeichnet, dass** der Boden (4) mindestens zwei steife Teilböden (11, 12, 25, 26) umfasst, welche längs einer mittig zwischen einem ersten Seitenrand und einem an denselben anschliessenden zweiten Seitenrand des Bodens (4) verlaufenden Bodenfaltlinie (13, 28) drehbar miteinander verbunden sind.

4. Faltsignal nach Anspruch 3, **dadurch gekennzeichnet, dass** der Boden (4) durch mindestens eine Bodentrennlinie (24) in Teile geteilt ist, welche nicht direkt miteinander verbunden sind.

5. Faltsignal nach einem der Ansprüche 1 bis 4, **dadurch gekennzeichnet, dass** es eine dem ersten Eckpunkt (10) gegenüberliegende mindestens abschnittsweise steife dritte Mantelplatte (3) umfasst, welche ebenfalls seitlich von zwei nach oben gegen die Spitze (9) zusammenlaufenden Seitenrändern begrenzt ist, wobei die erste Mantelplatte (1) und die dritte Mantelplatte (3) seitlich aneinander anschliessen, derart, dass sie längs benachbarter Seitenränder drehbar miteinander verbunden sind, sodass sie dort eine durch die Spitze (9) laufende Seitenkante bilden.

6. Faltsignal nach Anspruch 5, **dadurch gekennzeichnet, dass** die dritte Mantelplatte (3) und die zweite Mantelplatte (2) ebenfalls seitlich aneinander anschliessen, derart, dass sie längs benachbarter Seitenränder drehbar miteinander verbunden sind, sodass sie dort eine durch die Spitze (9) laufende Seitenkante bilden und die zweite Mantelplatte (2) aus einer ersten Teilplatte (5) und einer zweiten Teilplatte (6) besteht, welche welche längs einer in der Mitte zwischen ihren Seitenrändern verlaufenden Mantelfaltlinie (7) drehbar miteinander verbunden sind, derart, dass die Teilplatten (5, 6) zwischen die erste Mantelplatte (1) und die dritte Mantelplatte (3) eingefaltet werden können.

7. Faltsignal nach den Ansprüchen 4 und 6, **dadurch gekennzeichnet, dass** der Boden (4) lediglich mit der an die erste Mantelplatte (1) anschliessenden ersten Teilplatte (5) der zweiten Mantelplatte (2) verbunden ist.

8. Faltsignal nach einem der Ansprüche 1 bis 7, **dadurch gekennzeichnet, dass** die Mantelplatten (1, 2, 3) jeweils eine Grundform aufweisen, welche ein gleichschenkliges Dreieck oder Trapez umfasst.

9. Faltsignal nach Anspruch 8, **dadurch gekennzeichnet, dass** am unteren Rand des Dreiecks oder Trapezes jeweils ein rechteckiger Fussstreifen anschliesst.

10. Faltsignal nach einem der Ansprüche 1 bis 9, **dadurch gekennzeichnet, dass** drehbare Verbindungen zwischen zwei Platten jeweils durch ein Scharnier hergestellt sind, welches mindesten einen Scharnierstreifen (19) aus biegsamem Material umfasst.

11. Faltsignal nach Anspruch 10, **dadurch gekennzeichnet, dass** der Scharnierstreifen (19) jeweils zwei Randstreifen aufweist, deren jeder zwischen einer der Platten und einer sich längs mindestens eines Teils des Randes erstreckenden und dort mit der Platte verschraubten oder vernieteten Halteplatte (20) aus festem Material geklemmt ist.

12. Faltsignal nach einem der Ansprüche 1 bis 10, **dadurch gekennzeichnet, dass** es stabförmige Stützen (21) umfasst, welche sich längs mindestens eines Teils der Seitenkanten erstrecken und mindestens in einem einsatzbereiten Zustand des Faltsignals unten über den Boden (4) vorstehen.

13. Faltsignal nach Anspruch 12, **dadurch gekennzeichnet, dass** die Stützen (21) längs der Seitenkanten zwischen einer eingeschobenen Position, in der sie nicht wesentlich über den Boden (4) hinausragen, und einer ausgefahrenen Position verstellbar sind.

14. Faltsignal nach Anspruch 12 oder 13, **dadurch gekennzeichnet, dass** die Stützen (21) in mehreren Zwischenpositionen arretierbar sind.

15. Faltsignal nach Anspruch 10 oder 11 und einem der Ansprüche 12 bis 14, **dadurch gekennzeichnet, dass** an den Seitenkanten jeweils zwei Scharnierstreifen (19, 19') vorgesehen sind und die Stützen (21) als Stangen ausgebildet sind mit mindestens einem zwischen den Scharnierstreifen (19, 19') liegenden Abschnitt.

16. Faltsignal nach einem der Ansprüche 12 bis 15, **dadurch gekennzeichnet, dass** die Stützen (21) mindestens teilweise aus faserverstärktem Kunststoff bestehen.

17. Faltsignal nach einem der Ansprüche 1 bis 16, **dadurch gekennzeichnet, dass** die Mantelplatten (1, 2, 3) aus Plexiglas oder Polycarbonat bestehen.

18. Faltsignal nach Anspruch 17, **dadurch gekennzeichnet, dass** die Mantelplatten (1, 2, 3) jeweils als Verbundplatte mit einer zwischen zwei Aluminiumschichten liegenden Kunststoffschicht ausgebildet sind, wobei die Kunststoffschicht aus Polypropylen besteht.
